(19) Europäisches Patentamt
European Patent Office
Office européen des brevets

(11) **EP 4 592 419 A2**

(12) **EUROPEAN PATENT APPLICATION**

(43) Date of publication:
**30.07.2025 Bulletin 2025/31**

(21) Application number: 25151166.3

(22) Date of filing: **10.01.2025**

(51) International Patent Classification (IPC):
*C22C 38/44* (2006.01)   *C22C 38/42* (2006.01)
*C22C 38/46* (2006.01)   *C22C 38/02* (2006.01)
*C22C 38/04* (2006.01)   *C22C 38/06* (2006.01)
*C22C 38/00* (2006.01)   *C21D 1/18* (2006.01)
*C21D 6/00* (2006.01)

(52) Cooperative Patent Classification (CPC):
**C22C 38/44; C21D 1/18; C21D 6/004;**
**C22C 38/001; C22C 38/02; C22C 38/04;**
**C22C 38/06; C22C 38/42; C22C 38/46**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.01.2024 JP 2024008591**

(71) Applicant: **Daido Steel Co., Ltd.**
**Nagoya-shi, Aichi (JP)**

(72) Inventor: **KAWANO, Masamichi**
**Nagoya-shi (JP)**

(74) Representative: **HKW Intellectual Property PartG
mbB**
**Theresienhöhe 12**
**80339 München (DE)**

(54) **STEEL MATERIAL AND MOLD**

(57) Provided is a steel material that can be heat-treated to have an appropriate hardness and has an excellent machinability, impact value, and corrosion resistance, and a mold using the same. The steel material, contains 0.090<C≤0.170 mass%, 0.60<Si≤1.00 mass%, 0.10≤Mn≤0.60 mass%, 0.003≤P≤0.080 mass%, S≤0.012 mass%, 0.20<Cu≤0.58 mass%, 0.20≤Ni≤1.10 mass%, 0.20≤Ni≤1.10mass%, where Cu≤Ni, 7.70≤Cr≤8.20 mass%, 0.70<Mo≤1.20 mass%, 0.10<V<0.30 mass%, 0.007≤Al≤0.100 mass%, and 0.001<N<0.015 mass%, where 0.118≤C+N≤0.168 mass%, with the balance being Fe and inevitable impurities. The mold includes the steel material.

FIG. 1

**Description**

The present disclosure relates to a steel material, and more specifically to a steel material (in particular, a pre-hardened steel that is heat-treated to have a specified hardness by quenching and tempering under a specified condition) for manufacturing a mold used for injection molding or blow molding of plastics, or for molding or processing of rubbers and various carbon fiber reinforced plastics, and a mold manufactured from the steel material.

Background Art

A pre-hardened steel refers to a steel that was heat-treated to have a specified hardness and is capable of being cut. The pre-hardened steel does not require a heat-treatment and can be used for a mold directly after cutting. For this reason, the pre-hardened steel is widely used for a mold and mold parts used for injection molding or blow molding of plastics, or for molding or processing of rubbers and various carbon fiber reinforced plastics. Concerning such a pre-hardened steel and a manufacturing method thereof, various proposals have been heretofore made.

For example, Patent Document 1 discloses a steel for a mold for molding plastics having excellent temperature controllability, and containing, in mass%, C:0.03% to 0.25%, Si:0.01% to 0.40%, Mn:0.10% to 1.50%, P:≤0.30%, S:≤0.050%, Cu:0.05% to 0.20%, Ni:0.05% to 1.50%, Cr:5.0% to 10.0%, Mo:0.10% to 2.00%, V:0.01% to 0.10%, N:≤0.10%, O:<0.01%, and Al:≤0.05%, while satisfying (Cr+Mo)≤10% and 7≤(Cr+3.3Mo), with the balance being Fe and inevitable impurities.

The document describes that:

(a) It is possible to achieve both high mirror polishability and high impact value by adjusting mutual ratios of ferrite-generating elements (i.e., Cr and Mo) and austenite-generating elements (i.e., Mn and Ni), and
(b) It is possible to increase corrosion resistance and thermal conductivity by optimizing the amounts of Cr and Mo to satisfy the specified relationship.

Patent Document 2 discloses a steel for a mold containing, in mass%, 0.045≤C≤0.090, 0.01≤Si≤0.50, 0.10≤Mn≤0.60, 0.80≤Ni≤1.10, 6.60≤Cr≤8.60, 0.01≤Mo≤0.70, 0.001≤V≤0.200, 0.007≤Al≤0.150, and 0.0002≤N≤0.0500, and the balance being Fe and inevitable impurities.

The document describes that since the steel for a mold containing specified elements is set to have Al of the amount of 0.007 to 0.150%, the steel has favorable mirror polishability, intermediate corrosion resistance between 5% Cr steel and 12% Cr steel, and a high impact value, after heat-treated to have a specified hardness.

Patent Document 3 discloses a steel for a mold containing, in mass%, 0.070≤C≤0.130, 0.01≤Si≤0.60, 0.02≤Mn≤0.60, 0.003≤P≤0.150, 0.005≤Cu≤1.50, 0.005≤Ni≤0.80, 7.50≤Cr≤8.40, 0.70≤Mo≤1.20, 0.01<V<0.30, 0.010≤Al≤0.120, and 0.015≤N≤0.095, and the balance being Fe and inevitable impurities.

The document describes that the steel for a mold containing specified elements has optimized ingredients (particularly, Ni, Mo, and Al), and therefore, the steel has favorable SA property, tempering hardness, residual stress, machinability, impact value, and corrosion resistance.

When the pre-hardened steel is used to manufacture a mold, a pre-hardened steel material for a mold has to be first manufactured. The pre-hardened steel material for a mold is generally manufactured through processes of melting, refining, casting, heat-treatment for soaking, hot-working, intermediate heat-treatment (normalizing or tempering), spheroidizing annealing (SA), quenching, straightening, and tempering. Depending on the kind of steels, SA may not be necessary, the tempering may be carried out a plurality of times, or the tempering process may be carried out before or after straightening. Irrespective of the number of times of tempering processes, the final tempering process serves also to reduce the residual stress.

Next, a mold or mold parts are manufactured from the pre-hardened steel material. The mold or the mold parts are generally manufactured through the respective processes of machining, mirror polishing, surface decoration, and surface treatment. The surface decoration is a process of providing a specific pattern to a surface by embossing or the like, but may not be necessary depending on the application. The surface treatment is a process of hardening the surface by nitriding or PVD, but may not be necessary depending on the application.

The following are particularly important properties required for the pre-hardened steel material manufactured through the processes mentioned earlier, as well as for the mold and the mold parts manufactured from the steel material:

(1) tempering hardness (i.e., appropriate tempering hardness capable of achieving high impact value while maintaining favorable wear resistance);
(2) conformance to a designed shape (i.e., a sufficiently low residual stress to prevent warping or twisting of the mold during machining);
(3) machinability (i.e., ease of cutting and machining);

(4) impact value (i.e., an impact value high enough to suppress large cracking in a mold);

(5) corrosion resistance (i.e., resistance to corrosion high enough to prevent rusting even when used or stored in a humid environment);

(6) mirror polishability (i.e., high mirror polishing properties to allow smooth polishing);

(7) embossing processability (i.e., ease of surface decoration).

Here, Patent Document 1 discloses a material that has excellent temperature controllability, while further improvements are required in tempering hardness, machinability, and corrosion resistance.

Furthermore, Patent Document 2 discloses a material that ensures the mirror polishability and stability of the impact value by adjusting the amount of Al, while, as disclosed in Patent Document 1, further improvements are required in tempering hardness, machinability, and corrosion resistance.

Patent Document 3 discloses a material that the steel ensures the tempering hardness and the corrosion resistance by containing increased amount of N, while further improvements are required in machinability.

Meanwhile, to increase the amount of N, a nitrogen addition process under pressure (so-called nitriding) is required, while the installation of equipment for nitriding is large-scale.

The steel materials disclosed in Patent Documents 1 to 3 are so-called low-C 8%-Cr steels.

Citation List

Patent Literature

Patent Document 1: JP 2010-024510 A
Patent Document 2: JP 2020-063508 A
Patent Document 3: JP 2022-083627 A

Summary of Invention

Technical Problem

An object of the present disclosure is to provide a steel material that can be heat-treated to have appropriate hardness and has excellent machinability, impact value, and corrosion resistance.

Another object of the present disclosure is to provide a mold that can be heat-treated to have appropriate hardness and has excellent machinability, impact value, and corrosion resistance.

Solution to Problem

To solve the problems mentioned earlier, a steel material according to the present disclosure contains:

$0.090 < C \leq 0.170$ mass%;
$0.60 < Si \leq 1.00$ mass%;
$0.10 \leq Mn \leq 0.60$ mass%;
$0.003 \leq P \leq 0.080$ mass%;
$S < 0.012$ mass%;
$0.20 < Cu \leq 0.58$ mass%;
$0.20 \leq Ni \leq 1.10$ mass%, where $Cu \leq Ni$;
$7.70 \leq Cr \leq 8.20$ mass%;
$0.70 < Mo \leq 1.20$ mass%;
$0.10 < V \leq 0.30$ mass%;
$0.007 \leq Al \leq 0.100$ mass%; and
$0.001 < N < 0.015$ mass%, where $0.118 \leq C+N \leq 0.168$ mass%,
with the balance being Fe and inevitable impurities.

A mold according to the present disclosure is manufactured from the steel material according to the present disclosure.

Advantageous Effects of Invention

The steel material according to the present disclosure is a kind of low-C 8%-Cr steel. Since ingredients (in particular, Si, Al, C, V, and Mo) of the low-C 8%-Cr steels are optimized, the steel material has excellent properties, particularly (1) tempering hardness, (2) conformance to a designed shape, (3) machinability, (4) impact value, and (5) corrosion resistance.

More specifically, the steel material has the following properties:

(1) Hardness after tempering has an appropriate value of 35 HRC to 43 HRC;
(2) Residual stress after tempering is low;
(3) Machinability after tempering is as good as SKD61;
(4) Impact value after tempering is an appropriate value of $\geq 80 J/cm2$; and
(5) Corrosion resistance after tempering is as high as those of martensitic stainless steels.

For this reason, the steel material according to the present disclosure has the following advantages:

(A) Mirror polishability is excellent,
(B) Deformation during processing is little,
(C) Mold processing is easy,
(D) Cracking during use is unlikely to occur, and
(E) Rusting during use or storage is unlikely to occur.

Brief Description of Drawings

Figure 1 shows tempering hardness with respect to the LMP values (in Experiment 1).

Figure 2 shows drill machinability (in Experiment 2).

Figure 3 shows end-mill machinability (in Experiment 3).

Figure 4 shows impact values (in Experiment 4).

Figure 5 shows corrosion resistance (in Experiment 5).

Figure 6 shows tempering hardness with respect to the LMP values (for Examples).

Figure 7 shows tempering hardness with respect to the LMP values (in Comparative Examples).

Figure 8 shows drill machinability (for Examples and Comparative Examples).

Figure 9 shows end-mill machinability (for Examples and Comparative Examples).

Figure 10 shows impact values (for Examples and Comparative Examples).

Description of Embodiments of Present Invention

An embodiment of the present disclosure will be explained in detail below.

[1. Steel Material]

[1.1. Composition]

[1.1.1. Main Constituent Elements]

A steel material according to the present disclosure contains the following elements, with the balance being Fe and inevitable impurities. The types of elements added, the amount ranges thereof, and the reasons for limiting them are as described below.

(1) 0.090<C≤0.170 mass%:

If the amount of C is too small, δ-ferrite is contained into a pre-hardened steel material, resulting in decrease of mirror polishability and embossing processability of the pre-hardened steel material. Furthermore, the amount of VC or VCN, which suppresses migration of austenitic crystal grain boundaries upon quenching, is too small, and thus crystal grains are coarsened. As a result, an impact value decreases. Furthermore, when tempering is performed at a temperature of 510°C or higher and under a condition in which the LMP falls within a range of 16800≤LMP≤17200 to reduce residual stress, tempering hardness is less than 35 HRC. Accordingly, the tempering hardness of 35 HRC or higher can not be achieved.

Therefore, the amount of C must exceed 0.090 mass%. The amount of C is preferably 0.095 mass% or higher, and more preferably 0.105 mass% or higher.

On the other hand, if the amount of C is too large, VC or VCN is likely to crystallize in a coarse state when an ingot is cast, which lowers the impact value. Furthermore, pearlite precipitates during quenching, resulting in reduction of the tempering hardness, impact value, mirror polishability, embossing processability, and corrosion resistance. Furthermore, a large amount of Cr is consumed in the formation of carbides, which may result in insufficient corrosion resistance. Furthermore, cracking readily occurs when a welding repair is performed. Furthermore, thermal conductivity is reduced.

Therefore, the amount of C must be 0.170 mass% or smaller. The amount of C is preferably 0.165 mass% or smaller, and more preferably 0.160 mass% or smaller.

In an injection molding of a resin such as a plastic, the resin filled into a mold needs to be solidified quickly to enhance productivity. For this reason, the mold is required to cool quickly, in other words, to have high thermal conductivity. Furthermore, when a temperature of the mold is controlled by selectively flowing high-temperature fluid or low-temperature fluid into a flow path in the mold, the mold is required to have high responsiveness to heating and cooling. For these reasons, the high thermal conductivity is important.

(2) 0.60<Si≤1.00 mass%:

If the amount of Si is too small, machinability is reduced. Furthermore, the corrosion resistance in the air is insufficient.

Therefore, the amount of Si must be larger than 0.60 mass%. The amount of Si is preferably 0.62 mass% or larger, and more preferably 0.64 mass% or larger.

On the other hand, if the amount of Si is too large, the thermal conductivity is reduced. Furthermore, δ-ferrite is easily contained into the pre-hardened steel material. Furthermore, hard oxide scales are formed on a surface of the steel material, which is difficult to peel off, during hot-working, resulting in significant wear of a working tool.

Therefore, the amount of Si must be 1.00 mass% or smaller. The amount of Si is preferably 0.95 mass% or smaller, and more preferably 0.90 mass% or smaller.

When corrosion (i.e., rusting) occurs due to moisture in the air during a manufacturing process or storage of the mold, even just one part, it is necessary to do mirror polishing again. Doing the mirror polishing again is very time-consuming and costly. Furthermore, when the rusting cannot be removed by the mirror polishing, surface quality of the mold will be damaged. For this reason, the corrosion resistance to suppress the occurrence of rusting is important.

(3) 0.10≤Mn≤0.60 mass%:

If the amount of Mn is too small, pearlite precipitates during the quenching. Furthermore, δ-ferrite is contained into the pre-hardened steel material. Furthermore, quenchability is insufficient, and the impact value inside the steel material is reduced.

Therefore, the amount of Mn must be 0.10 mass% or larger. The amount of Mn is preferably 0.15 mass% or larger, and more preferably 0.22 mass% or larger. Furthermore, when the amount of Ni is 0.39 mass% or larger, the amount of Mn is more preferably 0.34 mass% or larger.

On the other hand, if the amount of Mn is too large, SA property is impaired. Furthermore, tempering at 510°C or higher reduces the impact value (i.e., a phenomenon of high-temperature temper brittleness is observed). Furthermore, the thermal conductivity is also reduced.

Therefore, the amount of Mn must be 0.60 mass% or smaller. The amount of Mn is preferably 0.56 mass% or smaller, and more preferably 0.54 mass% or smaller.

(4) 0.003<P<0.080 mass%:

Since P has an effect of crushing cutting chips into small pieces, a significantly small amount of P reduces the machinability. Furthermore, the significantly small amount of P may reduce high-temperature strength.

Therefore, the amount of P must be 0.003 mass% or larger. The amount of P is preferably 0.005 mass% or larger, and more preferably 0.007 mass% or larger.

On the other hand, if the amount of P is too large, the impact value is reduced significantly. Furthermore, P tends to segregate the grain boundaries and accelerates the corrosion at the grain boundaries, resulting in reduction of the corrosion resistance.

Therefore, the amount of P must be 0.080 mass% or smaller. The amount of P is preferably 0.070 mass% or smaller, and more preferably 0.060 mass% or smaller.

(5) S<0.012 mass%:

Generally, if the amount of S is too small, the machinability is reduced. However, the steel material according to the present disclosure secures the machinability by reducing the amount of Si, and therefore, the amount of S may be quite small. The lower limit of the amount of S is about 0.0002 mass%.

On the other hand, if the amount of S is too large, the impact value is reduced. Furthermore, S tends to segregate the grain boundaries and accelerates the corrosion from the grain boundaries, resulting in reduction of the corrosion resistance. Furthermore, S forms MnS with Mn, and the corrosion also occurs from the interface between MnS and the matrix, resulting in further reduction of the corrosion resistance.

Therefore, the amount of S must be 0.012 mass% or smaller. The amount of S is preferably 0.010 mass% or smaller, and more preferably 0.008 mass% or smaller.

(6) 0.20<Cu≤0.58 mass%:

If the amount of Cu is too small, pearlite precipitates during the quenching. Furthermore, $\delta$-ferrite is contained into the pre-hardened steel material. Furthermore, when the steel material is tempered at a temperature of 510°C or higher and under the condition in which the LMP falls within the range of $16800 \leq LMP \leq 17200$ to reduce the residual stress, the tempering hardness is less than 35 HRC. Accordingly, the steel material can not achieve the tempering hardness of 35 HRC or higher. Furthermore, the machinability is reduced and the corrosion resistance is insufficient.

Therefore, the amount of Cu must be 0.20 mass% or larger. The amount of Cu is preferably 0.22 mass% or larger, and more preferably 0.23 mass% or larger.

On the other hand, if the amount of Cu is too large, cracking occurs during the hot-working. Furthermore, the SA property is impaired. Furthermore, the thermal conductivity and the impact value are also reduced.

Therefore, the amount of Cu must be 0.58 mass% or smaller. The amount of Cu is preferably 0.54 mass% or smaller, and more preferably 0.50 mass% or smaller.

(7) 0.20<Ni≤1.10 mass%:

If the amount of Ni is too small, $\delta$-ferrite is contained into the pre-hardened steel material. Furthermore, the quenchability is insufficient, and the impact value inside the steel material is reduced. Furthermore, if the amount of Cu is larger, the effect of suppressing the cracking during the hot-working is reduced.

Therefore, the amount of Ni must be 0.20 mass% or larger. The amount of Ni is preferably 0.30 mass% or larger, and more preferably 0.39 mass% or larger.

On the other hand, if the amount of Ni is too large, the SA property is impaired and the thermal conductivity is also reduced.

Therefore, the amount of Ni must be 1.10 mass% or smaller. The amount of Ni is preferably 1.00 mass% or smaller, and more preferably 0.90 mass% or smaller.

(8) Cu≤Ni:

Ni has an effect of suppressing the cracking caused by Cu during the hot-working. However, even if the amount of Ni is appropriate, an excessive amount of Cu for the amount of Ni may reduce the effect of suppressing the cracking during the hot-working.

Therefore, to suppress the cracking during the hot-working, the amount of Cu must be equal to or smaller than the amount of Ni.

(9) 7.70≤Cr≤8.20 mass%:

If the amount of Cr is too small, the corrosion resistance is insufficient. Furthermore, the impact value is reduced.

Therefore, the amount of Cr must be 7.70 mass% or larger. The amount of Cr is preferably 7.75 mass% or larger, and more preferably 7.80 mass% or larger.

On the other hand, if the amount of Cr is too large, δ-ferrite is contained into the pre-hardened steel material. Furthermore, pearlite precipitates during the quenching. Furthermore, when the steel material is tempered at a temperature of 510°C or higher and under the condition in which the LMP falls within the range of 16800≤LMP≤17200 to reduce the residual stress, the tempering hardness is lower than 35 HRC. Accordingly, the steel material can not achieve the tempering hardness of 35 HRC or higher. Furthermore, the machinability is reduced and the thermal conductivity is reduced.

Therefore, the amount of Cr must be 8.20 mass% or smaller. The amount of Cr is preferably 8.15 mass% or smaller, and more preferably 8.10 mass% or smaller.

(10) 0.70<Co≤1.20 mass%:

If the amount of Mo is too small, the tempering hardness is lower than 35 HRC when the tempering is performed at a temperature of 510°C or higher and under the condition in which the LMP falls within the range of 16800≤LMP≤17200, to reduce the residual stress. Accordingly, the steel material can not achieve the tempering hardness of 35 HRC or higher. Furthermore, pearlite precipitates during the quenching. Furthermore, the corrosion resistance is insufficient.

Therefore, the amount of Mo must be 0.70 mass% or larger. The amount of Mo is preferably 0.75 mass% or larger, and more preferably 0.80 mass% or larger.

On the other hand, if the amount of Mo is too large, δ-ferrite is contained into the pre-hardened steel material. Furthermore, pearlite precipitates during the quenching. Furthermore, fracture toughness is also reduced.

Therefore, the amount of Mo must be 1.20 mass% or smaller. The amount of Mo is preferably 1.15 mass% or smaller, and more preferably 1.10 mass% or smaller.

(11) 0.10<V≤0.30 mass%:

If the amount of V is too small and when the steel material is tempered at a temperature of 510°C or higher and under the condition in which the LMP falls within the range of 16800≤LMP≤17200 to reduce the residual stress, the tempering hardness is lower than 35 HRC. Accordingly, the steel material can not achieve the tempering hardness of 35 HRC or higher. Furthermore, the amount of VC or VCN, which suppresses migration of the austenite crystal grain boundaries upon quenching, is too small, and thus the crystal grains are coarsened. When the crystal grains are coarsened during the quenching, the impact value is reduced.

Therefore, the amount of V must be 0.10 mass% or smaller. The amount of V is preferably 0.12 mass% or smaller, and more preferably 0.13 mass% or smaller.

On the other hand, if the amount of V is too large, VC or VCN crystallizes in a coarse state when an ingot is cast, which lowers the impact value. Furthermore, δ-ferrite is contained into the pre-hardened steel material.

Therefore, the amount of V must be 0.30 mass% or smaller. The amount of V is preferably 0.28 mass% or smaller, and more preferably 0.27 mass% or smaller.

(12) 0.007≤Al≤0.100 mass%:

The steel material (i.e., a type of low-C 8%-Cr steel) according to the present disclosure has a peculiarity that, in a case of low-Al, the impact value is reduced significantly even if the crystal grains are fine.

Therefore, the amount of Al must be 0.007 mass% or larger. The amount of Al is preferably 0.010 mass% or larger, and more preferably 0.020 mass% or larger.

If the amount of Al is too large, the amount of alumina is excessive. As a result, not only the impact value but also the mirror polishability is reduced. This is because of generation of pinholes due to dropping off of alumina. Furthermore, if the amount of Al is too large, the thermal conductivity is reduced and the machinability is also reduced significantly.

Therefore, the amount of Al must be 0.100 mass% or smaller. The amount of Al is preferably 0.090 mass% or smaller, and more preferably 0.085 mass% or smaller.

In particular, when the amount of O is 0.003 mass% or smaller, the adverse effects of alumina is no longer evident. Therefore, in the range of 0.050<Al≤0.085 mass%, where the lower limit of the amount of Al is increased, a balance among a crystal grain size, the impact value, the mirror polishability, the machinability, and the thermal conductivity is greatly improved.

(13) 0.001<N<0.015 mass%:

If the amount of N is too small, the amount of AlN, which suppresses migration of the austenite crystal grain boundaries upon quenching, is too small. Consequently, the crystal grains are likely to grow excessively. Furthermore, δ-ferrite is contained into the pre-hardened steel material. Furthermore, when the steel material is tempered at a temperature of 510°C or higher and under the condition in which the LMP falls within the range of $16800 \leq LMP \leq 17200$ to reduce the residual stress, the tempering hardness is lower than 35 HRC. Accordingly, the steel material can not achieve the tempering hardness of 35 HRC or higher. Furthermore, the corrosion resistance is also insufficient.

Therefore, the amount of N must be 0.001 mass% or larger. The amount of N is preferably 0.002 mass% or larger, and more preferably 0.003 mass% or larger.

Meanwhile, to contain a large amount of N, the amount of N corresponding to the amount of impurity present in a raw material is insufficient, and therefore, N must be added actively, for which dedicated equipment is required. Furthermore, VC or VCN crystallizes in a coarse state when an ingot is cast, and the amount of coarse AlN increases, reducing the impact value. When the mold is repaired by welding, nitrogen may vaporize at the welded part, which may form voids on a surface of the mold. The voids may be formed inside the mold during the welding repair and may be exposed to outside by the mirror polishing.

Removing these voids by the mirror polishing is very time-consuming and costly. If these voids cannot be removed, surface quality of the mold is impaired. Furthermore, these voids inside the mold can cause the cracking during use, even if they are not exposed to the outside.

When B is solid-dissolved, the quenchability can be improved. To allow B to be solid-dissolved, it is necessary to fix N, which easily bonds with B, in the form of a compound. For this reason, N is fixed in a form of TiN by addition of Ti that easily forms nitrides. If the amount of N is large, the amount of Ti is also required to be large. As a result, the amount of coarse TiN may increase, and the impact value may be reduced.

Therefore, the amount of N must be smaller than 0.015 mass%. The amount of N is preferably 0.013 mass% or smaller, and more preferably 0.012 mass% or smaller.

(14) $0.118 \leq C+N \leq 0.168$ mass%:

Even if the amount of each of C and N exceeds the lower limit mentioned earlier, a significantly small amount of (C+N) may cause the problems mentioned earlier.

Therefore, the amount of (C+N) must be 0.118 mass% or larger. The amount of (C+N) is preferably 0.122 mass% or larger. Even if the amount of each of C and N is the upper limit mentioned earlier or smaller, the problems mentioned earlier may occur if the amount of (C+N) is too large.

Therefore, the amount of (C+N) must be 0.168 mass% or smaller. The amount of (C+N) is preferably 0.164 mass% or smaller.

(15) Inevitable Impurities

The steel may contain the following inevitable impurities in specified amounts:

O<_0.005 mass%,
B<0.0002 mass%,
W<_0.30 mass%,
Co≤0.30 mass%,
Nb≤0.004 mass%,
Ta≤0.004 mass%,
Ti≤0.004 mass%,
Zr<0.004 mass%,
Ca≤0.0005 mass%,
Se≤0.03 mass%,
Te≤0.005 mass%,
Bi<0.01 mass%,
Pb≤0.03 mass%, and/or
Mg≤0.02 mass%.

[1.1.2 Accessory Constituent Elements]

The steel material according to the present disclosure may further contain one or more of the following elements in addition to the main constituent elements mentioned earlier. The type of element to be added, the ingredient range thereof, and the reason for limiting the range are as follows.

[A. Group A]

(16) 0.0002<B<0.0080 mass%:

When the amount of P is large, the impact value may be low because P segregating the grain boundaries reduces grain boundary strength. Addition of B is effective for improving the grain boundary strength. Furthermore, when the total amount of alloying elements is small, ferrite or pearlite may precipitate during the quenching. For suppressing the phenomenon, the addition of B is also effective. To obtain such an effect, the amount of B is preferably larger than 0.0002 mass%. The amount of B is preferably 0.0003 mass% or larger, and more preferably 0.0004 mass% or larger.

If the amount of B is large, compounds of B with iron (i.e., borides or carboride) increase, which lowers the impact value.

Therefore, the amount of B is preferably 0.0080 mass% or smaller. The amount of B is preferably 0.0075 mass% or smaller, and more preferably 0.0070 mass% or smaller.

When B is added to improve the grain boundary strength, it is less meaningful if B forms BN. Therefore, at the time of adding B to the steel containing a large amount of N, then N should be bonded with an element other than B. Specifically, N should be brought into bond with an element capable of forming a nitride, such as Ti, Zr, and Nb. Although the effect is obtained even if the amount of each of the elements mentioned above is equivalent to the amount of an impurity, each element should be added in the amount described below when the amount is insufficient.

Meanwhile, when it is desired to disperse BN to improve the machinability, it is not necessary to bond N actively with the nitride-forming elements mentioned earlier.

[B. Group B]

(17) 0.30<W≤4.00 mass%:

The steel material according to the present disclosure has a low-C amount and the amounts of Mo and V are small; therefore, the steel may have insufficient strength depending on the application. To impart high strength to the steel material according to the present disclosure, addition of W is effective. In order to obtain such an effect, the amount of W is preferably larger than 0.30 mass%. The amount of W is preferably 0.50 mass% or larger, and more preferably 1.00 mass% or larger.

Meanwhile, a significantly large amount of W results in significant segregation and an increased material cost.

Therefore, the amount of W is preferably 4.00 mass% or smaller. The amount of W is preferably 3.90 mass% or smaller, and more preferably 3.80 mass% or smaller.

(18) 0.30<Co≤3.00 mass%:

To increase the strength of the steel material according to the present disclosure, it is also effective to add Co in place of or in addition to W. To obtain such an effect, the amount of Co is preferably larger than 0.30 mass%. The amount of Co is preferably 0.50 mass% or larger, and more preferably 1.00 mass% or larger.

Meanwhile, a significantly large amount of W results in significant segregation and an increased material cost. Therefore, the amount of Co is preferably 3.00 mass% or smaller. The amount of Co is preferably 2.80 mass% or smaller, and more preferably 2.50 mass% or smaller.

[C. Group C]

(19) 0.004<Nb≤0.100 mass%:
(20) 0.004<Ta≤0.100 mass%:
(21) 0.004<Ti≤0.100 mass%:
(22) 0.004<Zr <0.100 mass% :

Since the steel material according to the present disclosure is the low-C steel and the amount of V is not large, VC or VCN, which suppresses migration of the austenite crystal grain boundary, may be insufficient at the time of quenching. In this case, depending on a quenching condition, austenite crystal grains may tend to grow excessively. To suppress growth of the grains, it is effective to add carbides-, nitride-, or carbonitride-forming element (i.e., Nb, Ta, Ti, and/or Zr) and disperse the compound such as the carbide or the like in the matrix. To obtain such an effect, each of the amounts of Nb, Ta, Ti, and Zr is preferably larger than 0.004 mass%. Each of the amounts of these elements is preferably 0.006 mass% or larger, and more preferably 0.008 mass% or larger.

Meanwhile, if the amounts of these elements are too large, the carbide, nitride, or carbonitride are coarsened, reducing the impact value. Furthermore, addition of these elements in amounts more than necessary leads to an increase in the material cost. Therefore, each of the amounts of Nb, Ta, Ti, and Zr is preferably 0.100 mass% or smaller. The amount of each of these elements is preferably 0.090 mass% or smaller, and more preferably 0.080 mass% or smaller.

The steel for the mold according to the present disclosure may contain any one of Nb, Ta, Ti, and Zr, or may contain two or more of them.

[D. Group D]

(23) 0.0005<Ca≤0.2000 mass%:
(24) 0.03<Se≤0.50 mass%:
(25) 0.005<Te≤0.100 mass%:
(26) 0.01<Bi≤0.50 mass%:
(27) 0.003<Pb≤0.50 mass%:

Although the steel material according to the present disclosure ensures the machinability with Si, improvement of the machinability may further be required depending on the application. To improve the machinability, it is effective to add an element called a free-cutting ingredient (i.e., Ca, Se, Te, Bi, and/or Pb). To obtain such an effect, each of the amounts of Ca, Se, Te, Bi, and Pb is preferably more than the lower limit value mentioned earlier.

The amount of Ca is preferably 0.0006 mass% or larger, and more preferably 0.0007 mass% or larger.

The amount of Se is preferably 0.04 mass% or larger, and more preferably 0.05 mass% or larger.

The amount of Te is preferably 0.006 mass% or larger, and more preferably 0.007 mass% or larger.

The amount of Bi is preferably 0.02 mass% or larger, and more preferably 0.03 mass% or larger.

The amount of Pb is preferably 0.04 mass% or larger, and more preferably 0.05 mass% or larger.

Meanwhile, significantly large amounts of these elements lead to increased susceptibility to the cracking during the hot-working and reduce the impact value. Therefore, each of Ca, Se, Te, Bi, and Pb is preferably contained in the amount equal to or not larger than the upper limit mentioned earlier.

The amount of Ca is preferably 0.1900 mass% or smaller, and more preferably 0.1800 mass% or smaller.

The amount of Se is preferably 0.48 mass% or smaller, and more preferably 0.46 mass% or smaller.

The amount of Te is preferably 0.090 mass% or smaller, and more preferably 0.080 mass% or smaller.

The amount of Bi is preferably 0.450 mass% or smaller, and more preferably 0.400 mass% or smaller.

The amount of Pb is preferably 0.45 mass% or smaller, and more preferably 0.40 mass% or smaller.

The steel material according to the present disclosure preferably contains one or more of Ca, Se, Te, Bi, and Pb.

[1.2. Properties]

[1.2.1 Hardness]

The steel material according to the present disclosure is usually used in a state subjected to a heat-treatment to have a specified hardness. When the ingredients mentioned earlier are applied and a condition of the heat-treatment is optimized in the steel material according to the present disclosure, the hardness after the heat-treatment is 35 HRC or higher and 43 HRC or lower.

If the hardness after the heat-treatment exceeds 43 HRC, the machinability is reduced and the number of steps required to manufacture the mold by machining is increased.

On the other hand, if the hardness after the heat-treatment is lower than 35 HRC, the mirror polishability and the wear resistance are reduced.

In the steel material according to the present disclosure, the "hardness" refers to Rockwell hardness (in C-scale) measured at 15°C to 35°C on a sample obtained by steps of:

(a) preparing a square bar having a shape of 11 to 12 mm X 11 to 12 mm × 20 to 25 mm,
(b) holding the square bar at a quenching temperature of 895°C to 975°C for 2 hours,
(c) cooling the square bar from the quenching temperature to 220°C at a cooling rate of 15°C to 30°C/min., and further cooling the square bar from 220°C to 100°C or lower at an arbitrary cooling rate,

(d) tempering the square bar once under a condition in which a tempering temperature T(°C) and a tempering time X(Hr) satisfy the following formulae (1) to (3), and

(e) removing a decarburized portion on a surface of the square bar subjected to the tempering, where

$$16800 \leq LMP \leq 17200 \quad (1)$$

$$LMP = (T+273) \times (20+\log X) \quad (2)$$

$$510°C \leq T \leq 590°C \quad (3).$$

If the quenching temperature is within the range mentioned earlier, it is possible to achieve both a desired tempering hardness and a desired impact value.

If the quenching temperature is lower than 895°C, the solid-dissolved elements are insufficient, making it difficult to obtain stably a hardness of 35 HRC or higher. Furthermore, depending on the ingredients, the quenching temperature may be lower than Ac3 point. Therefore, the quenching temperature of 895°C or higher is preferable.

On the other hand, if the quenching temperature exceeds 975°C, the crystal grains are coarsened significantly, which reduces the impact value. Therefore, the quenching temperature of 975°C or lower is preferable.

LMP (i.e., Larson-Miller Parameter) is a kind of temperature-time conversion parameter.

When the LMP is within the range mentioned earlier, low residual stress and favorable corrosion resistance can be achieved at the same time.

When the LMP is lower than 16800, the residual stress is not sufficiently released. Therefore, the LMP is preferably 16800 or higher, and more preferably 16900 or higher.

On the other hand, when the LMP exceeds 17200, the amount of Cr solid-dissolved in the steel is large, so that Cr is consumed in the formation of carbides, and the amount of Cr solid-dissolved in the steel is reduced. This reduces the corrosion resistance.

Therefore, the LMP is preferably 17200 or lower, and more preferably 17150 or lower.

The tempering temperature T and the tempering time X are not particularly limited as long as the LMP falls within the range mentioned earlier. However, if the tempering temperature is too low, a long time may be required to obtain the desired effects. Therefore, the tempering temperature T is preferably 510°C or higher. If the tempering temperature T is lower than 510°C, the time required to meet the value of LMP=16800 exceeds 29 hours, resulting in a significant reduction in productivity.

On the other hand, if the tempering temperature T is too high, the tempering time is too short, and the desired effects may not be obtained for all parts of the pre-hardened steel. Therefore, the tempering temperature T is preferably 590°C or lower.

For example, if the tempering temperature T exceeds 590°C, the time required to meet the value of LMP=17200 is shorter than 0.9 hours, making it difficult to satisfy the condition in which the LMP falls within the range of 16800≤LMP≤ 17200 for all parts (from the center to the surface) in a cross-section of the pre-hardened steel.

[2. Mold]

The mold according to the present disclosure is manufactured from the steel material according to the present invention.

Furthermore, with respect to the present disclosure, "mold" includes not only a mold body but also mold parts such as pins that are attached to the mold body when used. In other words, "mold" refers to all steel parts that come into contact with a molded object (plastic, vinyl, rubber, etc.).

[3. Manufacturing Method for Steel Material]

The steel material according to the present disclosure can be obtained by:

(a) melting and casting raw materials mixed to achieve a specified composition;
(b) subjecting an ingot to the heat-treatment for soaking; and
(c) subjecting an ingot to the hot-working after the heat-treatment for soaking.
(d) annealing the raw material after the hot-working, if necessary;
(e) tempering the raw material, if necessary;
(f) spheroidized annealing (SA) the raw material, if necessary; and
(g) quenching and tempering the raw material, if necessary.

The steel material according to the present disclosure has optimized ingredients, and therefore, it may have a required hardness after the hot-working. If the steel material does not have a required hardness, it is preferable to perform a required pretreatment after the hot-working, and then quenched and tempered. The steel material is processed into a specified shape and used for various applications after the steel material is heat-treated to have a required hardness by quenching and tempering.

[4. Effects]

[4.1. Properties Required for Steel Material]

The following properties are particularly required for the steel material (i.e., a so-called pre-hardened steel material) subjected to the heat-treatment to have a specified hardness and used for various purposes. The following properties are also particularly required for a mold and mold parts manufactured from the steel material.

(1) Tempering Hardness : A certain degree of tempering hardness is required to ensure the strength of the mold. If the tempering hardness is too low, a shape of the mold changes due to wear during the use as a mold. On the other hand, if the tempering hardness is too high, the machining into a mold shape is difficult, and the impact value is reduced. For this reason, the steel is easily subjected to the large cracking during the use as a mold. To achieve both favorable wear resistance and high impact value, a tempering hardness of about 30 HRC to 55 HRC is usually required, although the degree of the tempering hardness varies depending on the application.

(2) Conformance to Designed shape High conformance to a designed shape means that an intended shape can be obtained after the machining. If the pre-hardened steel material has high residual stress, a balance of the residual stress may be changed after the machining. As a result, the mold manufactured from the steel material may be distorted. This phenomenon is called machining distortion. A steel material that is less likely to cause the machining distortion is considered to have the high conformance to a designed shape. A steel material that can obtain high hardness even when tempered at a high temperature has the high conformance to a designed shape because the residual stress can be sufficiently released by high-temperature tempering.

(3) Machinability: "Machinability" is an issue when the pre-hardened steel material is machined into a shape of the mold. The mold is required to have a channel to carry fluids for cooling and heating, and a hole that serves as the channel is formed with a tool such as a drill. Unless the machining speed is reduced, a hole can not be formed in a steel material that has a poor machinability, and the tool such as a drill experiences significant wear. The machinability is greatly affected by hardness. However, even with the same hardness, the machinability often differs when the composition of the steel material is different. The steel material is required to have not only the properties necessary for a mold, but also high machinability.

(4) Impact Value: A higher impact value is preferable. If the impact value is low, the mold is more likely to be subjected to large cracking during the use as a mold. Since it is difficult to repair the large cracking, the mold having experienced the large cracking needs to be replaced with a new one. To reduce a cost of the mold, it is necessary to prevent such a cracking from occurring. For this reason, the pre-hardened steel material is required to have a high impact value.

(5) Corrosion Resistance: Higher corrosion resistance is preferable. The mold according to the present disclosure is used for the injection molding or blow molding of a resin or for molding or processing of rubbers or fiber-reinforced plastics. For this reason, the surface of the mold may be corroded by corrosive gases generated from the resin during the injection molding. Furthermore, during the manufacturing process of the mold or storage of the mold, the surface of the mold may be corroded by moisture in the air. For the reason, high corrosion resistance is required for the pre-hardened steel material.

(6) Mirror Polishability: "Mirror polishability" is an index of how smoothly the surface of the mold can be polished. The smoother the surface of the mold can be polished, the higher the mirror polishability is evaluated. The pre-hardened steel material with high mirror polishability is suitable for the mold. In many cases, such a steel material contains few foreign matters (crystals, inclusions, etc.) and is also very hard.

(7) Embossing Processabilities: "Embossing" refers to a process of giving a specific pattern (i.e., unevenness) to the surface of the mold by corrosion with a chemical solution. The steel material that can easily be patterned is evaluated as having favorable embossing processability. Embossing is generally achieved by corrosion caused by acid, which often conflicts with the corrosion resistance.

[4.2. Properties of steel material according to present disclosure]

Generally, it is difficult to satisfy the seven properties mentioned earlier at the same time. In contrast, the steel material according to the present disclosure has an optimized composition and therefore has an appropriate tempering hardness, high machinability, high impact value, and high corrosion resistance.

In addition, the necessary hardness can be obtained even when the steel material is tempered at a high temperature, and the residual stress is also relieved by tempering at a high temperature. Therefore, the steel material according to the present disclosure has the high conformance to a designed shape during the processing.

The steel material according to the present disclosure is a type of low-C 8%-Cr steel. When the amount of Si is relatively increased and the amount of Al is relatively decreased in the low-C 8%-Cr steels, both the machinability and the impact value can be stabilized at high level.

Furthermore, when the amount of Si is relatively increased in the low-C 8%-Cr steels, the corrosion resistance in a humid atmosphere can be improved.

Furthermore, when the ingredients (especially Si, Al, C, V, and Mo) in the low-C 8%-Cr steels are optimized, the required hardness can be obtained even when the low-C 8%-Cr steels are tempered at high temperatures.

In summary, the steel material according to the present disclosure has favorable properties such as (1)tempering hardness, (2)conformance to a designed shape, (3)machinability, (4)impact value, and (5)corrosion resistance.

Specifically, the following properties are found:

(1) An appropriate value of hardness of 35 HRC to 43 HRC is obtained after tempering,
(2) Residual stress is reduced after tempering
(3) Machinability after tempering is the same level as SKD61,
(4) An appropriate impact value of ≥80J/cm2 is obtained after tempering, and
(5) Corrosion resistance after tempering is as high as martensitic stainless steels.

Therefore, the steel material according to the present disclosure has the following advantages:

(A) Mirror polishability is excellent,
(B) Little deformation occurs during processing,
(C) Mold processing is easily performed,
(D) Cracking is less likely to occur during use, and
(E) Rusting is less likely to occur during use or storage.

[Examples]

(Experiment 1: Tempering Hardness)

[1. Preparation of Samples]

With respect to a pre-hardened steel material for a mold, controlling of tempering hardness is important. Therefore, the tempering hardness was evaluated for five steel materials, Steel A to Steel E, shown in Table 1.

Steel A corresponds to a steel described in Patent Document 1, having smaller amounts of C, Si, Cu, Mo, and V compared to the present disclosure. Steel E has smaller amounts of C, Si, and Cu, and a larger amount of N compared to the present disclosure.

[Table 1]

|         | C    | Si   | Mn   | P    | S      | Cu   | Ni   | Cr   | Mo   | V    | Al   | N    | C+N  |
|---------|------|------|------|------|--------|------|------|------|------|------|------|------|------|
| Steel A | 0,06 | 0,28 | 0,29 | 0,02 | 0,0007 | 0,09 | 0,96 | 8,01 | 0,44 | 0,08 | 0,04 | 0,01 | 0,07 |
| Steel B | 0,11 | 0,81 | 0,46 | 0,03 | 0,0009 | 0,46 | 0,87 | 7,92 | 1,04 | 0,23 | 0,06 | 0,01 | 0,12 |
| Steel C | 0,13 | 0,64 | 0,35 | 0,02 | 0,0008 | 0,24 | 0,62 | 7,93 | 0,95 | 0,18 | 0,06 | 0,01 | 0,14 |
| Steel D | 0,16 | 0,72 | 0,23 | 0,01 | 0,0007 | 0,35 | 0,53 | 7,96 | 0,86 | 0,15 | 0,05 | 0,01 | 0,17 |
| Steel E | 0,06 | 0,27 | 0,31 | 0,02 | 0,0007 | 0,08 | 0,97 | 8,02 | 0,95 | 0,18 | 0,03 | 0,09 | 0,14 |

[2.Test Method]

5 test pieces having shapes of 11.5 mm × 11.5 mm × 20 to 24 mm were cut out from each steel material.

(1) Quenching: Each test piece was held at 920°C for 2 hours in a vacuum furnace. Thereafter, nitrogen gas was introduced into the furnace for slowly cooling to 220°C at a rate of 30°C/min. by balancing heating and cooling. After cooling to 100°C or lower, each test piece was removed from the furnace.

(2) Tempering: Each test piece was heated in the vacuum furnace to the specified temperature T (540°C to 560°C) for 5 hours and held for the specified time X (2.5 hours to 7.0 hours), then nitrogen gas was introduced into the furnace to cool to 100°C or lower, and then each test piece was removed from the furnace.

The specified temperature T was not an atmospheric temperature or furnace wall temperature, but a temperature of each test piece, and the temperature of each test piece was maintained within $T \pm 2°C$.

Then, Rockwell hardness (in C scale) was measured for each test piece at room temperature (15°C or higher and 35°C or lower).

Here, the combinations of the specified temperature T (i.e., a tempering temperature) and the specified time X (i.e., a tempering holding time) are as follows:

550°C×3.5Hr: LMP=16908
540°C×7.0Hr: LMP=16947
560°C×2.5Hr: LMP=16991
550°C×5.0Hr: LMP=17035
555°C×5.0Hr: LMP=17139

LMP=(tempering temperature T(°C)+273) x (20+log(tempering holding timeX(Hr)))

[3. Results]

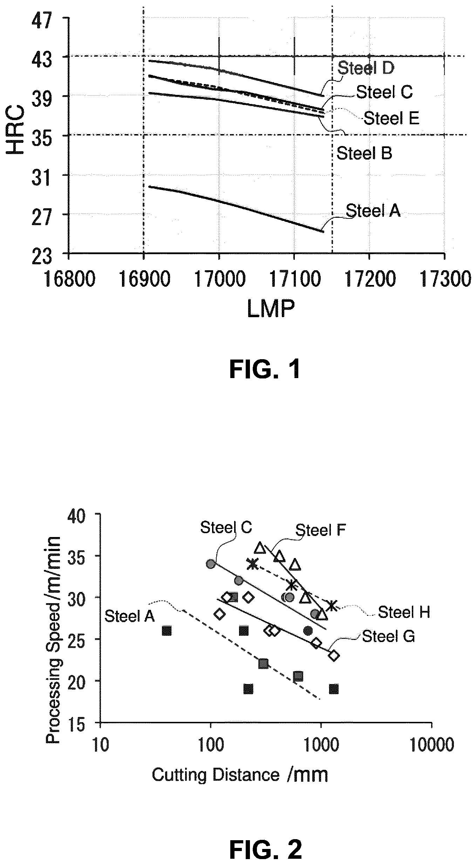

Figure 1 shows the tempering hardness with respect to the LMP value.

The desired tempering hardness range is 35 HRC to 43 HRC (within dotted lines in the figure) in the range of $16900 \leq LMP \leq 17150$, where the residual stress is low. The values of the tempering hardness of all steels other than Steel A are within the range indicated by the dotted lines.

Steel A has smaller amounts of C, Si, Cu, Mo, and V than the steel material of the present disclosure.

(Experiment 2: Machinability 1 (Drill Machinability))

[1. Preparation of Samples]

With respect to the pre-hardened steel material for the mold, the machinability is important. Therefore, the drill machinability was evaluated for 5 steel materials shown in Table 2: Steel A, Steel C, Steel F, Steel G, and Steel H.

Steel H corresponds to JIS SKD61 (AISI H13). Steel F corresponds to Steel C with the amount of Si being increased, and Steel G corresponds to Steel C with the amount of Al being increased.

[Table 2]

|         | C    | Si   | Mn   | P    | S      | Cu   | Ni   | Cr   | Mo   | V    | Al   | N    | C+N  |
|---------|------|------|------|------|--------|------|------|------|------|------|------|------|------|
| Steel A | 0,06 | 0,28 | 0,29 | 0,02 | 0,0007 | 0,09 | 0,96 | 8,01 | 0,44 | 0,08 | 0,04 | 0,01 | 0,07 |
| Steel C | 0,13 | 0,64 | 0,35 | 0,02 | 0,0008 | 0,24 | 0,62 | 7,93 | 0,95 | 0,18 | 0,06 | 0,01 | 0,14 |
| Steel F | 0,13 | 0,82 | 0,35 | 0,02 | 0,0008 | 0,24 | 0,89 | 7,95 | 0,94 | 0,18 | 0,06 | 0,01 | 0,14 |
| Steel G | 0,13 | 0,63 | 0,35 | 0,02 | 0,0008 | 0,26 | 0,62 | 7,93 | 0,95 | 0,18 | 0,12 | 0,01 | 0,14 |
| Steel H | 0,37 | 0,98 | 0,44 | 0,01 | 0,0009 | 0,09 | 0,13 | 5,21 | 1,21 | 0,86 | 0,03 | 0,01 | 0,38 |

[2. Test Method]

A test piece having a shape of 25 mm × 50 mm × 200 mm was cut out from each steel material.

(1-1) Quenching: (Low-C 8%-Cr steels other than Steel H)

Each test piece was held at 920°C for 2 hours in the vacuum furnace. Thereafter, nitrogen gas was introduced into the furnace for slowly cooling to 220°C at a rate of 15°C/min. by balancing heating and cooling. After cooling to 100°C or lower, each test piece was removed from the furnace.

(1-2) Quenching: (Steel H): Each test piece was held at 1030°C for 2 hours in the vacuum furnace. Thereafter, nitrogen

14

gas was introduced into the furnace for slowly cooling to 220°C at a rate of 15°C/min. by balancing heating and cooling. After cooling to 100°C or lower, each test piece was removed from the furnace.

(2) Tempering: Each test piece was heat-treated by setting an appropriate LMP to achieve a tempering hardness of 36.4 HRC to 37.9 HRC.

Then, the drill machinability of each test piece was evaluated at room temperature.

With respect to the evaluation of the drill machinability, a high-speed steel drill with a diameter of 5 mm was used. This drill was pressed against the test piece at a specified machining speed to drill a hole with a depth of 20 mm. The drill was removed from the test piece and a hole with a depth of 20 mm was drilled at another position again at a specified machining speed. This procedure was repeated until the tool life expired, i.e., until the drill could no longer reach a depth of 20 mm due to the wear or breakage. Then, the cutting distance until the tool life expired was calculated using the following calculation:

the number of holes drilled until the tool life expired × hole depth (20 mm).

Next, the same procedure was carried out while changing the machining speed, and the cumulative cutting distance was calculated.

[3. Results]

Figure 2 shows correlations between the machining speed and the cutting distance. The steel types located in the upper right of the figure have better machinability (as indicated in the high machining speed and greater cumulative cutting distance).

Figure 2 shows that the machinability improves as the amount of Si increases. Specifically, the relationship among the steels in machinability is as follows: Steel A (amount of Si: 0.28 mass%)<Steel C (amount of Si: 0.64 mass%) <Steel F (amount of Si: 0.82 mass%)<Steel H (amount of Si: 0.98 mass%).

Steel H corresponds to SKD61, which is known to have a favorable machinability, and in fact, had the best machinability. Steel F has the machinability equivalent to that of Steel H, and Steel C also shows the machinability close to that of Steel H.

Meanwhile, Figure 2 also shows that the machinability is reduced as the amount of Al increases. Specifically, the relationship among the steels in machinability was as follows: Steel C (amount of Si: 0.64 mass%, amount of Al: 0.055 mass%) > Steel G (amount of Si: 0.64 mass%, amount of Al: 0.119 mass%). While Steel C had the machinability close to that of Steel H, the machinability of Steel G was reduced to a level approaching that of Steel A.

From the description mentioned earlier, it was found that the drill machinability improves with the increase in the amount of Si and is reduced with an increase in the amount of Al.

(Experiment 3: Machinability 2 (end-mill machinability))

[1. Preparation of Samples]

End-mill machinability was evaluated for five steel materials shown in Table 2: Steel A, Steel C, Steel F, Steel G, and Steel H, which are the same steels as used in Experiment 2.

[2. Test Method]

The size of the test piece and the condition for quenching and tempering were the same as in Experiment 2, and therefore, explanations will be omitted.

The end-mill machinability for each test piece was evaluated at room temperature.

With respect to the evaluation of the end-mill machinability, a tool used was XDGT1550PDER-G30VP15TF. Each test piece was cut by down-cutting with a tool feed rate of 0.2 mm per blade, a cutting depth of 1.0 mm × 4.0 mm, and a machining speed of 400 m/min. After cutting to a specified distance, the wear amount of the tool was measured. A specified distance was cut again under the same condition, and a wear amount of the tool was measured. This procedure was repeated to find out a transition of the maximum wear amount of the tool for a cumulative cutting distance.

[3. Results]

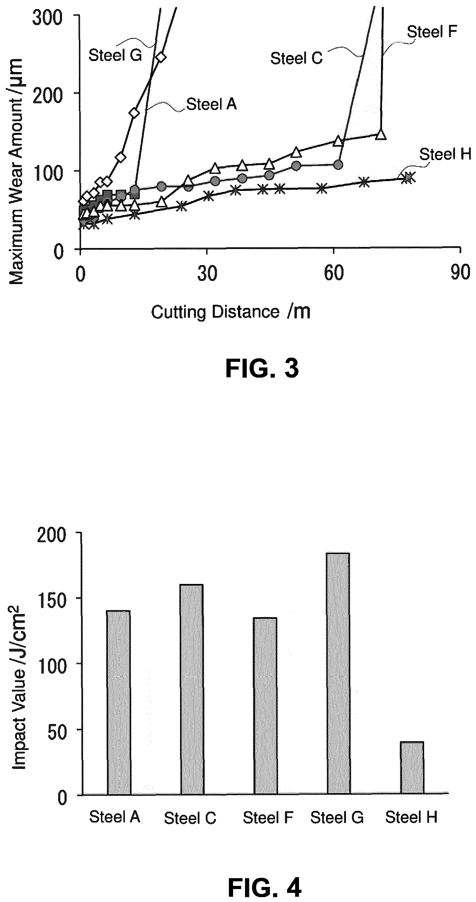

Figure 3 shows correlations between the maximum wear amount of the tool and the cutting distance. The steels located in the lower right of the figure have better machinability (because they do not wear out the tool even after cutting long distances).

Figure 3 shows that the machinability improves as the amount of Si increases. Specifically, a relationship among steels in machinability was as follows: Steel A (amount of Si: 0.28 mass%) < Steel C (amount of Si: 0.64 mass%) < Steel F (amount of Si: 0.82 mass%) < Steel H (amount of Si: 0.98 mass%). Steel H corresponds to SKD61, which is known to have a favorable machinability, and in fact, had the best machinability. The relationship among these steels in cutting distance at which the maximum wear amount increases sharply was G < A < C < F < H, which shows that Steel F has the second highest machinability after Steel H. For Steel C, the cutting distance at which the maximum wear amount increased sharply was 60 m, which is smaller than 70 m for Steel F, but the difference between the two is small. The maximum wear amount at which the cutting distance reached up to 60 m for Steel C was the second smallest after Steel H. Accordingly, Steel C can be regarded to have high machinability comparable to Steel F.

Meanwhile, Figure 3 also shows that the machinability is reduced as the amount of Al increases. Specifically, the relationship among the steels in machinability was as follows: Steel C (amount of Si: 0.64 mass%, amount of Al: 0.055 mass%) > Steel G (amount of Si: 0.64 mass%, amount of Al: 0.119 mass%). While Steel C had the machinability close to that of Steel H, the machinability of Steel G was reduced more than that of Steel A. The reduction in machinability due to the increase in the amount of Al was more noticeable than that in the case of the drill machinability.

From the description mentioned earlier, it was found that the end-mill machinability improves with the increase in the amount of Si while decreases with the increase in the amount of Al.

(Experiment 4: Impact Value)

[1. Preparation of Samples]

It is important for a pre-hardened steel for a mold to have a high impact value. Therefore, the impact value was evaluated for five steel materials shown in Table 2: Steel A, Steel C, Steel F, Steel G, and Steel H.

[2. Test Method]

A plurality of test pieces having shapes of 11 mm × 11 mm × 55 mm were cut out from each steel material.

(1-1) Quenching: (the Low-C 8%-Cr steels other than Steel H) Each test piece was held at 920°C for 2 hours in the vacuum furnace. Thereafter, nitrogen gas was introduced into the furnace for slowly cooling to 220°C at a rate of 20°C/min. by balancing heating and cooling. After cooling to 100°C or lower, each test piece was removed from the furnace.

(1-2) Quenching: (Steel H) Each test piece was held at 1030°C for 2 hours in the vacuum furnace. Thereafter, nitrogen gas was introduced into the furnace for slowly cooling to 220°C at a rate of 20°C/min. by balancing heating and cooling. After cooling to 100°C or lower, each test piece was removed from the furnace.

(2) Tempering: Each test piece was tempered to have an appropriate LMP to achieve a tempering hardness of 37.2 HRC to 37.9 HRC.

Then, each test piece having a shape of 10 mm × 10 mm × 55 mm was prepared and used as the test piece for evaluating the impact value. Specifically, the impact value is found, using the test piece provided with a U-notch with a height below the U-notch = 8 mm and a cross-sectional area of the test piece below the U-notch = 0.8 cm2, by dividing absorbed energy obtained by conducting an impact test at room temperature (15°C or higher and 35°C or lower), by the cross-sectional area of the test piece below the U-notch.

Then, for each steel, an average value of the impact values of 6 test pieces was measured and defined as the impact value of each steel.

[3. Results]

Figure 4 shows the impact value for each steel. The impact value of each of the low-C 8%-Cr steels is reduced when the amount of Al is small, but Steel A, which has the amount of Al of 0.038 mass%, was able to secure a high impact value. Steels C and F, in which the amount of Si is increased, were both able to secure high impact values equivalent to Steel A. Steel G corresponding Steel C with the amount of Al being increased, also secured a high impact value. In other words, Steel A, Steel C, Steel F, and Steel G, which are the low-C 8%-Cr steels, were able to stably secure high impact values of over 100J/cm2. The impact value of Steel H (i.e., SKD61) was lower than 50J/cm2. From the description mentioned earlier, it is confirmed that there is no significant reduction in impact value due to an increase in the amount of Si.

(Experiment 5: Corrosion Resistance)

[1. Preparation of Samples]

It is important for a pre-hardened steel for a mold to have favorable corrosion resistance. Therefore, the corrosion resistance was evaluated for five steel materials, Steel A, Steel C, Steel F, Steel G, and Steel H shown in Table 2.

[2. Test Method]

A test piece having a shape of 25.5 mm × 40.5 mm × 12.5 mm was cut out from each steel material.

(1-1) Quenching (the low-C 8%-Cr steels other than Steel H): Each test piece was held at 920°C for 2 hours in the vacuum furnace. Thereafter, nitrogen gas was introduced into the furnace for slowly cooling to 220°C at a rate of 20°C/min. by balancing heating and cooling. After cooling to 100°C or lower, each test piece was removed from the furnace.

(1-2) Quenching: (Steel H) Each test piece was held at 1030°C for 2 hours in the vacuum furnace. Thereafter, nitrogen gas was introduced into the furnace for slowly cooling to 220°C at a rate of 20°C/min. by balancing heating and cooling. After cooling to 100°C or lower, each test piece was removed from the furnace.

(2) Tempering: Each test piece was heat-treated to have an appropriate the LMP to achieve a tempering hardness of 35.5 HRC to 37.8 HRC.

[3. Results]

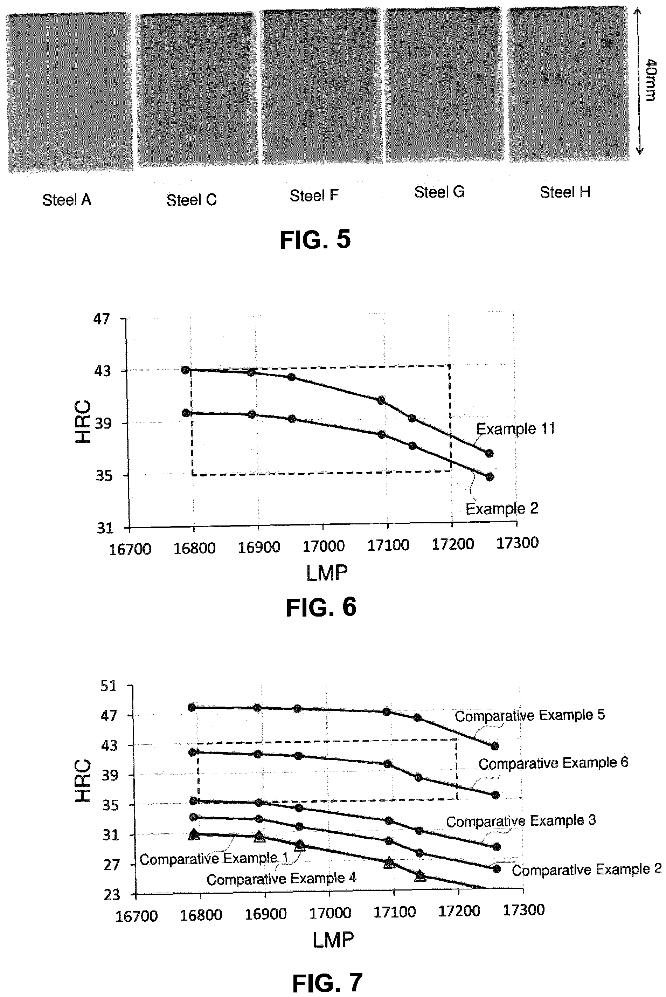

Figure 5 shows an occurrence of rusting in each steel. Steel H (i.e., SKD61) had noticeable rusting. Steel A, a low-C 8%-Cr steel, had less rusting than Steel H. It was also found that the corrosion resistance improves as the amount of Si increases. Specifically, the relationship among the steels in the amount of rusting that occurred was as follows: Steel A (amount of Si: 0.28 mass%) > Steel C (amount of Si: 0.64 mass%) > Steel F (amount of Si: 0.82 mass%). Furthermore, the amount of rusting did not increase even when the amount of Al increased. Specifically, the amount of rusting that occurred in Steel G (amount of Si: 0.64 mass%, and amount of Al: 0.055 mass%) was equivalent to that of Steel G (amount of Si: 0.64 mass%, amount of Al: 0.119 mass%).

From the description mentioned earlier, it was found that the corrosion resistance improves with the increase in the amount of Si and is not reduced with the increase in the amount of Al.

(Examples 1 to 13, Comparative Examples 1 to 6)

[1. Preparation of Samples]

Table 3 shows chemical compositions of 19 types of steels used for evaluations. Although not listed in the table, other elements may be contained in amounts less than those specified as impurities.

Comparative Examples 1 to 6 are the low-C 8%-Cr steels, and a type of the low-C 8%-Cr steel is also employed in the present disclosure. Furthermore, Comparative Examples 1 to 6 have the amount of Si smaller than the steel material of the present disclosure.

[Table 3]

| | | C | Si | Mn | P | S | Cu | Ni | Cr | Mo | V | Al | N | C+N | Others |
|---|---|---|---|---|---|---|---|---|---|---|---|---|---|---|---|
| Example | 1 | 0,15 | 0,64 | 0,22 | 0,01 | 0,0004 | 0,23 | 0,40 | 7,82 | 0,80 | 0,13 | 0,020 | 0,01 | 0,160 | |
| | 2 | 0,11 | 0,89 | 0,52 | 0,05 | 0,0070 | 0,49 | 0,90 | 8,09 | 1,10 | 0,27 | 0,03 | 0,01 | 0,12 | |
| | 3 | 0,12 | 0,77 | 0,37 | 0,03 | 0,0020 | 0,36 | 0,65 | 7,95 | 0,94 | 0,20 | 0,05 | 0,01 | 0,129 | |
| | 4 | 0,160 | 0,62 | 0,12 | 0 | 0,0002 | 0,21 | 0,21 | 7,70 | 0,72 | 0,10 | 0,01 | 0 | 0,16 | |
| | 5 | 0,13 | 0,99 | 0,60 | 0,08 | 0,0120 | 0,57 | 1,09 | 8,20 | 1,20 | 0,30 | 0,03 | 0 | 0,14 | |
| | 6 | 0,14 | 0,71 | 0,29 | 0,02 | 0,0010 | 0,29 | 0,78 | 7,89 | 0,99 | 0,18 | 0,04 | 0,010 | 0,15 | |
| | 7 | 0,13 | 0,64 | 0,34 | 0,02 | 0,0008 | 0,22 | 0,75 | 7,93 | 0,95 | 0,18 | 0,06 | 0,01 | 0,14 | |
| | 8 | 0,140 | 0,66 | 0,36 | 0,02 | 0,0007 | 0,24 | 0,52 | 7,91 | 0,90 | 0,23 | 0,1 | 0,01 | 0,15 | 0.0019B, 0.26Ti |
| | 9 | 0,12 | 0,73 | 0,34 | 0,01 | 0,0005 | 0,26 | 0,75 | 7,97 | 0,93 | 0,17 | 0,06 | 0,01 | 0,13 | 1.75Co |
| | 10 | 0,130 | 0,64 | 0,54 | 0,01 | 0,0005 | 0,23 | 0,40 | 7,96 | 0,97 | 0,16 | 0,05 | 0,01 | 0,14 | 3.13W, 0.94Co |
| | 11 | 0,16 | 0,76 | 0,49 | 0,02 | 0,0005 | 0,25 | 0,41 | 8,01 | 0,92 | 0,20 | 0,07 | 0,01 | 0,16 | 0.03Nb |
| | 12 | 0,11 | 0,65 | 0,40 | 0,020 | 0,0010 | 0,23 | 0,63 | 7,90 | 1,04 | 0,14 | 0,08 | 0,01 | 0,12 | 0.01Nb, 0.02Ta |
| | 13 | 0,12 | 0,80 | 0,45 | 0,04 | 0,0020 | 0,23 | 0,88 | 8,08 | 0,81 | 0,26 | 0,08 | 0 | 0,12 | 0.04Te |
| Comparative Example | 1 | 0,06 | 0,24 | 0,28 | 0,02 | 0,0008 | 0,04 | 0,95 | 7,97 | 0,44 | 0,08 | 0,04 | 0,01 | 0,07 | |
| | 2 | 0,06 | 0,31 | 0,19 | 0,11 | 0,0110 | 0,06 | 1,23 | 8,66 | 0,44 | 0,08 | 0 | 0,02 | 0,09 | |
| | 3 | 0,08 | 0,26 | 0,57 | 0,02 | 0,0007 | 0,07 | 0,98 | 7,01 | 0,45 | 0,09 | 0,04 | 0,01 | 0,09 | |
| | 4 | 0,06 | 0,27 | 0,32 | 0,02 | 0,0008 | 0,05 | 0,94 | 7,99 | 0,44 | 0,09 | 0,03 | 0,01 | 0,07 | |
| | 5 | 0,130 | 0,29 | 0,58 | 0,02 | 0,0008 | 1,02 | 0,36 | 8,27 | 1,17 | 0,29 | 0 | 0,09 | 0,22 | |
| | 6 | 0,1 | 0,28 | 0,31 | 0,02 | 0,0007 | 0,02 | 0,41 | 7,94 | 0,94 | 0,18 | 0,04 | 0,05 | 0,15 | |

Comparative Example 1 has the smallest amount of Si among the 19 types of steels.

Comparative Example 2 has the largest amount of Si among Comparative Examples, a larger amount of P compared to the present disclosure, a relatively larger amount of S, and a smaller amount of Al compared to the present disclosure.

Comparative Example 3 has a smaller amount of Cr compared to the present disclosure.

Comparative Example 5 has a smaller amount of Al and a larger amount of Cu, and satisfies a relationship of Cu>Ni, compared to the present disclosure.

Comparative Example 6 is the only Comparative Example in which the amount of (C+N) is within a composition range of the present disclosure. Furthermore, Comparative Example 6 also contains the amount of Mo within the composition range of the present disclosure.

In Comparative Examples 1 to 6, at least three of the 12 main elements of the present invention (C, Si, Mn, P, S, Cu, Ni, Cr, Mo, V, Al, and N) are out of the composition range of the steel material according to the present disclosure.

Each of the 19 types of steels shown in Table 3 was cast into a 50 kg ingot. Subsequently, hot-working was performed to produce a bar material having a length of approximately 2000 mm and a rectangular cross-section of 40 mm high and 65 mm wide, and then the bar material was cooled to near room temperature.

The bar material was then heated to 970°C and normalized by soaking for 1 hour.

With respect to the bar material of Comparative Example 5, cracking was found. It is considered that the cracking is caused during the hot-working because of Cu since Comparative Example 5 does not satisfy the relationship of Cu≤Ni.

[2. Evaluation]

Various test pieces were prepared from the bar material mentioned earlier, and the four properties of (1) tempering hardness, (2) machinability, (3) impact value, and (4) corrosion resistance were evaluated.

[2.1. Tempering hardness]

[2.1.1. Test Method]

A test piece having a shape of 11.5 mm × 11.5 mm × 22 mm was cut out from each bar material mentioned earlier from which the decarburized layer was avoided.

A test method was the same as that used in Experiment 1. However, the combinations of the specified temperature T (i.e., tempering temperature) and the specified time X (i.e., tempering holding time) were as follows:

540°C×4.5Hr: LMP=16791
540°C×6.0Hr: LMP=16893
555°C×3.0Hr: LMP=16955
547°C×7.0Hr: LMP=17093
547°C×8.0Hr: LMP=17141
555°C×7.0Hr: LMP=17260

LMP=((tempering temperature T(°C)+273) x (20+log(tempering retention timeX(Hr)))

[2.1.2. Result]

Table 4 shows test results. Figure 6 shows the results of Examples, and Figure 7 shows the results of Comparative Examples.

The desired tempering hardness range is 35 HRC to 43 HRC (within dotted lines in Figures 6 and 7) in the range of 16800≤LMP≤17200, where the residual stress is low.

Among Examples, Example 11 had the highest tempering hardness, and Example 2 had the lowest tempering hardness. Each of other Examples had the tempering hardness between Examples 2 and 11.

In both Examples 2 and 11, the HRC values for 16800≤LMP≤17200 were within the range indicated by the dotted lines (see Figure 6), respectively. In other words, in all Examples, the HRC values for 16800≤LMP≤17200 were within the range indicated by the dotted lines, respectively. It is assumed that the values change linearly between each measurement point.

[Table 4]

| T(°C) | X(Hr) | LMP | Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| 540 | 4,5 | 16791 | 42,7 | 40 | 41 | 43,0 | 41 | 42 | 42 | 42 | 41 | 42 | 43,0 | 40 | 40 |
| 540 | 6 | 16893 | 42,3 | 40 | 41 | 43 | 41 | 42 | 41,0 | 42 | 40 | 41 | 43 | 40 | 40 |
| 555 | 3 | 16955 | 41,8 | 39 | 41 | 42,0 | 40 | 41 | 41 | 41 | 40 | 41,0 | 42 | 39,0 | 39 |
| 547 | 7 | 17093 | 39,9 | 38 | 39 | 40,0 | 39 | 40 | 39 | 40,0 | 39 | 40 | 40 | 38 | 38 |
| 547 | 8 | 17141 | 38,7 | 37 | 38 | 39 | 38 | 38 | 38 | 38 | 37 | 38 | 39,0 | 37 | 37 |
| 555 | 7 | 17260 | 35,8 | 34 | 35 | 36 | 35,0 | 36 | 35 | 36 | 35 | 35 | 36 | 35 | 35 |

| T(°C) | X(Hr) | LMP | Comparative Example | | | | | |
|---|---|---|---|---|---|---|---|---|
| | | | 1 | 2 | 3 | 4 | 5 | 6 |
| 540 | 4,5 | 16791 | 31,0 | 33 | 35 | 31 | 48 | 42 |
| 540 | 6 | 16893 | 30,5 | 33 | 35,0 | 31 | 48 | 42 |
| 555 | 3 | 16955 | 29,2 | 32 | 34 | 29 | 48 | 41 |
| 547 | 7 | 17093 | 26,8 | 30 | 32 | 27 | 47 | 40 |
| 547 | 8 | 17141 | 24,9 | 28 | 31 | 25 | 46,0 | 38,0 |
| 555 | 7 | 17260 | 22,6 | 26 | 29 | 23 | 42,0 | 36 |

Example 11, which has large amounts of C and Mo, had the highest tempering hardness.

Although the amount of C was small in Example 2, the tempering hardness was increased by increasing the amounts of Mo and V, and the HRC value for 16800≤LMP≤17200 was within the range indicated by the dotted lines (see Figure 6).

Figure 7 shows the results of the tempering hardness for Comparative Examples. Only Comparative Example 6 had the HRC value for 16800≤LMP≤17200 indicated by the dotted lines.

This could be due to that, in Comparative Example 6, the amount of (C+N) is within the composition range of the present disclosure, and the amount of Mo is also within the composition range of the present disclosure.

Comparative Examples 1 to 4 contains smaller amounts of (C+N) and Comparative Example 5 contains larger amount of (C+N) compared to the present disclosure. Correspondingly, Comparative Examples 1 to 4 had insufficient tempering hardness, and Comparative Example 5 had excessive tempering hardness.

[2.2. Machinability 1 (Drill Machinability)]

[2.2.1. Test Method]

A test piece having a shape of 25 mm $\times$ 50 mm $\times$ 200 mm was cut from each bar material mentioned earlier from which the decarburized layer was avoided.

A test method was the same as that used in Experiment 2 (i.e., for the low-C 8%-Cr steels). Each test piece was heat-treated to have a tempering hardness of 36.5 HRC to 37.5 HRC.

The machinability was evaluated by VL300. Here, "VL300" refers to a machining speed (m/min.) at which the drill reaches the end of its tool life when the cumulative cutting distance reaches 300 mm. Specifically, in a figure in which an X-axis represents the cutting distance (m) and a Y-axis represents the machining speed (m/min), the Y-axis value corresponding to an X value of 300 mm is found by interpolation. VL300 is an index of machining efficiency. When the value is higher, the hole can be drilled faster. In this relation, when the value is higher, the steel is judged to have better machinability and processing efficiency.

[2.2.2. Results]

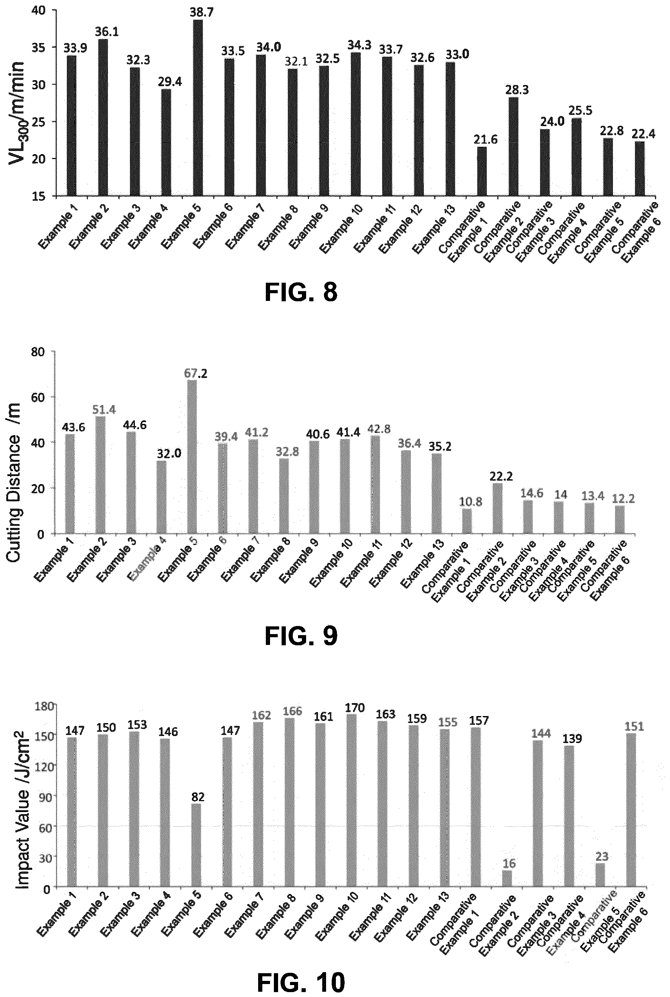

Figure 8 shows the results. The values of VL300 of Examples 1 to 13 were 29.4 m/min. or higher.

On the other hand, the values of VL300 of Comparative Examples 1 to 6 were 28.3 m/min. or lower.

Example 5, which had large amounts of Si, P, and S, had a large value of VL300 of 38.7 m/min. Furthermore, Example 2, which had relatively large amounts of Si, P, and S, also had a large value of VL300 of 36.1 m/min.

Meanwhile, Example 4, which had a relatively large amount of C and a relatively small amount of Si, had a value of VL300 of 29.4 m/min., the smallest among Examples.

Furthermore, with respect to Comparative Examples, Comparative Example 2, which had the largest amounts of Si, P, and S among Comparative Examples, had a value of VL300 of 28.3 m/min.

Meanwhile, Comparative Example 1, which had the smallest amount of Si among the 19 types of steels, had a value of VL300 of 21.6 m/min., the smallest among the 19 types of steels.

The effects of the amounts of Si, P, and S in machinability can also be confirmed from the results of Comparative Examples.

[2.3. Machinability 2 (End-Mill Machinability)]

[2.3.1. Test Method]

A test piece having a shape of 25 mm × 50 mm × 200 mm was cut from each bar material from which the decarburized layer was avoided.

A test method was the same as that used in Experiment 3 (i.e., for the low-C 8%-Cr steels). Each test piece was heat-treated to have a hardness of 36.5 HRC to 37.5 HRC.

With respect to the end-mill machinability, the cutting distance refers to the one at which a wear amount of a tool reaches 100 $\mu$m. Specifically, in a figure in which an X-axis represents the cutting distance (m) and a Y-axis represents the maximum wear amount (pm), an X-axis value corresponding to a Y value of 100 pm is found by interpolation. When the cutting distance is longer, the steel can cut with one tool, and the steel is judged to have better machinability.

[2.3.2. Results]

Figure 9 shows the results. The overall trend was similar to that of machinability 1 (i.e., drill machinability), with the cutting distances of Examples 5 and 2 being long, and the cutting distance of Example 4 being the shortest among Examples.

Furthermore, among Comparative Examples, the cutting distance of Comparative Example 2 was long, and the cutting distance of Comparative Example 1 was the shortest.

[2.4. Impact Value]

[2.4.1. Test Method]

A test piece having a shape of 11 mm × 11 mm × 55 mm was cut from each bar material mentioned earlier from which the decarburized layer was avoided.

A test method was the same as that used in Experiment 4 (i.e., for the low-C 8%-Cr steels). Each test piece was heat-treated to have a tempering hardness of 36.5 HRC to 37.5 HRC.

[2.4.2. Results]

Figure 10 shows the results. Impact values of Examples were 145 J/cm2 or higher, except for Example 5. The impact value of Example 5, which had large amounts of P and S, was 82 J/cm2.

The steel materials of Comparative Examples, which were the low-C 8%-Cr steels similar to Examples, also had the impact values equivalent to those of Examples, except for Comparative Examples 2 and 5.

The impact values of Comparative Examples 2 and 5, which had the amount of Al smaller than that of the present disclosure, were smaller than 30J/cm2.

Furthermore, if the amount of Al is too small in the low-C 8%-Cr steels, the impact value is significantly small.

[2.5. Corrosion Resistance]

[2.5.1. Test Method]

A test piece having a shape of 25 mm × 40.5 mm × 12.5 mm was cut from each bar material mentioned earlier from which the decarburized layer was avoided.

A test method was the same as that used in Experiment 5 (i.e., for the low-C 8%-Cr steels). Each test piece was also heat-treated to have a tempering hardness of 36.5 HRC to 37.5 HRC.

[2.5.2. Results]

Table 5 shows the results. Evaluation was based on four levels: S (Superior), A, B, and I (Inferior). Grade S indicates that almost no rusting was found. Grade A indicates that some rusting was found, but the corrosion resistance was determined to be favorable.

Meanwhile, Grade B indicates that the rusting was noticeable and sufficient rusting prevention measures must be taken when used in a humid environment. Grade I indicates that there was a great deal of rusting, and that when used as a mold, the rusting is expected to be noticeable even if sufficient rusting prevention measures are taken.

[Table 5]

| Example | | | | | | | | | | | | |
|---|---|---|---|---|---|---|---|---|---|---|---|---|
| 1 | 2 | 3 | 4 | 5 | 6 | 7 | 8 | 9 | 10 | 11 | 12 | 13 |
| S | S | S | A | A | S | S | S | S | S | S | S | S |

| Comparative Example | | | | | |
|---|---|---|---|---|---|
| 1 | 2 | 3 | 4 | 5 | 6 |
| B | I | I | B | B | B |

In Examples, Examples 4 and 5 were given Grade A, and the others were given Grade S.

Example 4, which had a large amount of C and a small amount of Si, was given Grade A.

Example 5, which had large amounts of P and S, was given Grade A.

Even in Examples 4 and 5, which are considered to have disadvantageous compositions for the corrosion resistance, favorable corrosion resistance was achieved because the amount of Si was within the composition range of the present disclosure.

Therefore, the corrosion resistance of Examples is found to be very excellent.

Meanwhile, in Comparative Examples, Comparative Examples 2 and 3 were given Grade I, and other Comparative Examples were given Grade B.

Comparative Example 2, which had large amounts of P and S and a small amount of Si, was given Grade I.

Comparative Example 3, which had a small amount of Cr, was given Grade I.

[3. Summary]

Examples 1 to 13 showed favorable results in tempering hardness, machinability, impact value, and corrosion resistance. Meanwhile, in Comparative Examples, the machinability and the corrosion resistance were insufficient while some steels were excellent in tempering hardness and impact value. This is because the amount of Si, which improves the machinability and the corrosion resistance, was small.

Furthermore, in Examples 1 to 13, the residual stress was also reduced by setting the LMP in an appropriate range of value.

Therefore, it was found that Examples 1 to 13 have (1) appropriate tempering hardness of 35 HRC to 43 HRC, (2) low residual stress, (3) favorable machinability, (4) high impact value, and (5) favorable corrosion resistance.

[4. Versatility]

Although the bar obtained by melting was used as examples in verifying the properties, the steel material according to the present disclosure can also be used in the form of powder, block, wire material, or plate material.

For example, when the steel material according to the present disclosure is formed into powder, the powder can be applied to various types of sequential manufacturing such as additive manufacturing (i.e., SLM method, LMD method, etc.) and plasma powder welding (PPW).

Furthermore, when the steel material according to the present disclosure is formed into a block obtained by melting, it is possible to manufacture a mold or parts from the block.

Furthermore, when the steel material according to the present disclosure is formed into the bar or wire materials obtained by melting, the bar or wire materials can be applied to a sequential manufacturing or repairing for overlaying using TIG or laser welding.

Alternatively, when the steel material according to the present disclosure is formed into a plate material, it is possible to join a plurality of the plate material to manufacture a mold or parts.

It is also possible to manufacture a split-structured mold or parts including the steel material according to the present disclosure and join them to manufacture a mold or parts.

As described earlier, the steel material according to the present disclosure can be used for manufacturing and repairing a mold or parts in various forms and shapes of materials and a variety of methods.

While the embodiments of the present disclosure have been described in detail, the present disclosure is not limited to these embodiments by any means, and various changes and modifications can be made therein without departing from the gist of the present disclosure.

[Industrial Applicability]

The steel material according to the present disclosure can be used for a mold or mold parts used for injection molding or blow molding of plastic or resins, for molding of rubbers, or for molding of fiber-reinforced plastics.

The mold according to the present disclosure can be used for the injection molding or blow molding of plastics or resins, for molding of rubbers, or for molding of fiber-reinforced plastics.

It is also effective to bond the mold according to the present disclosure with surface modification (e.g., shot peening, shot blasting, sand blasting, nitridation, PVD, PCVD, CVD, plating, and DLC coating).

Furthermore, the mold according to the present disclosure can be used such that an uneven pattern is given to the surface of the mold by chemical corrosion, machining, or laser processing (which are called "embossing"), and the pattern can be transferred to a surface of plastic or resin to add value.

Furthermore, the steel material according to the present disclosure can be used in the form of powder or plate material for additive manufacturing. The steel material according to the present disclosure also can be used for a welding repair for a mold or mold parts.

**Claims**

**1.** A steel material, comprising:

$0.090 < C \leq 0.170$ mass%;
$0.60 < Si \leq 1.00$ mass%;
$0.10 \leq Mn \leq 0.60$ mass%;
$0.003 \leq P \leq 0.080$ mass%;
$S \leq 0.012$ mass%;
$0.20 < Cu \leq 0.58$ mass%;
$0.20 \leq Ni \leq 1.10$ mass%, where $Cu \leq Ni$;
$7.70 \leq Cr \leq 8.20$ mass%;
$0.70 < Mo \leq 1.20$ mass%;
$0.10 < V \leq 0.30$ mass%;
$0.007 \leq Al \leq 0.100$ mass%; and
$0.001 \leq N < 0.015$ mass%, where $0.118 \leq C+N \leq 0.168$ mass%,

with the balance being Fe and inevitable impurities.

**2.** The steel material according to claim 1, further comprising one or more selected from the group consisting of the following Groups A to D:

Group A:
$0.0002 < B \leq 0.0080$ mass%
Group B:

$0.30 < W \leq 4.00$ mass%; and/or
$0.30 < Co \leq 3.00$ mass%

Group C:
at least one selected from:

0.004<Nb≤0.100 mass%;
0.004<Ta≤0.100 mass%;
0.004<Ti≤0.100 mass%; and
0.004<Zr≤0.100 mass%

Group D:
at least one selected from:

0.0005<Ca≤0.2000 mass%;
0.03<Se≤0.50 mass%;
0.005<Te≤0.100 mass%;
0.01<Bi≤0.50 mass%; and
0.03<Pb≤0.50 mass%

3. The steel material according to claim 1 or 2, having a hardness of 35 HRC or higher and 43 HRC or lower, where the "hardness" refers to Rockwell hardness (in C-scale) measured at 15°C to 35°C on a sample obtained by steps of

(a) preparing a square bar having a shape of 11 to 12 mm $\times$ 11 to 12 mm $\times$ 20 to 25 mm,
(b) holding the square bar at a quenching temperature of 895°C to 975°C for 2 hours,
(c) cooling the square bar from the quenching temperature to 220°C at a cooling rate of 15°C to 30°C/min., and further cooling the square bar from 220°C to 100°C or lower at an arbitrary cooling rate,
(d) tempering the square bar once under a condition in which a tempering temperature T (°C) and a tempering time $\times$ (Hr) satisfy the following formulae (1) to (3), and
(e) removing a decarburized portion on a surface of the square bar subjected to the tempering, where

$$16800 \leq LMP \leq 17200 \qquad (1)$$

$$LMP = (T+273) \times (20+\log X) \quad (2)$$

$$510°C \leq T \leq 590°C \qquad (3).$$

4. A mold comprising the steel material according to any of claims 1 to 3.

**FIG. 1**

**FIG. 2**

FIG. 3

FIG. 4

Steel A      Steel C      Steel F      Steel G      Steel H

**FIG. 5**

**FIG. 6**

**FIG. 7**

**FIG. 8**

**FIG. 9**

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010024510 A
- JP 2020063508 A

- JP 2022083627 A